Europäisches Patentamt

European Patent Office

Office européen des brevets

(19)

(11) Veröffentlichungsnummer: **0 319 743 B1**

## (12) EUROPÄISCHE PATENTSCHRIFT

(45) Veröffentlichungstag der Patentschrift:
27.02.91 Patentblatt 91/09

(51) Int. Cl.$^5$: **C01B 17/80, B01J 8/02**

(21) Anmeldenummer: 88118960.9

(22) Anmeldetag: 14.11.88

(54) Konvertierungssystem und Verfahren zur Herstellung von Schwefeltrioxid.

(30) Priorität: 27.11.87 DE 3740255

(43) Veröffentlichungstag der Anmeldung:
14.06.89 Patentblatt 89/24

(45) Bekanntmachung des Hinweises auf die
Patenterteilung:
27.02.91 Patentblatt 91/09

(84) Benannte Vertragsstaaten:
BE DE ES FR GB IT NL SE

(56) Entgegenhaltungen:
FR-A- 2 427 300
US-A- 2 363 738

(73) Patentinhaber: BAYER AG
D-5090 Leverkusen 1 Bayerwerk (DE)
Patentinhaber: METALLGESELLSCHAFT AG
Reuterweg 14 Postfach 3724
D-6000 Frankfurt/M.1 (DE)

(72) Erfinder: Dörr, Karl Heinz, Dipl.-Ing.
Am Gonzenheimer Spiess 6
D-6500 Mainz (DE)
Erfinder: Grimm, Hugo
Sudetenstrasse 37
D-8760 Miltenberg (DE)
Erfinder: Schalk, Wolfram, Dipl.-Ing.
Talstrasse 29
D-6382 Friedrichsdorf (DE)
Erfinder: Neumann, Heinz, Dipl.-Ing.
Sandbergstrasse 24
D-6123 Bad König (DE)
Erfinder: Gerken, Rudolf, Dr.
Ratherstrasse 79
D-4150 Krefeld (DE)
Erfinder: van Fürden, Armin
Schönwässerstrasse 212
D-4150 Krefeld (DE)
Erfinder: Lailach, Günter, Dr.
Bismarckstrasse 109
D-4150 Krefeld (DE)

## Beschreibung

Die vorliegende Erfindung betrifft einen Konverter für die katalytische Oxidation von Schwefeldioxid zu Schwefeltrioxid, bestehend aus einem stehenden zylindrischen Gehäuse, in dem in einem ringförmigen Raum die Katalysatormasse zwischen gasdurchlässigen Wänden angeordnet ist sowie ein Verfahren zur katalytischen Oxidation von Schwefeldioxid zu Schwefeltrioxid.

Es ist bekannt und in Schwefelsäurefabriken üblich, Konvertierungssysteme für die katalytische $SO_2$-Oxidation zu verwenden, die aus zylindrischen Konvertern, auch Kontaktöfen genannt, und inneren oder äußeren Gas-Gas-oder Flüssigkeits-Gas-Wärmetauschern zusammengesetzt sind. Die Konverter besitzen vier oder fünf Katalysatorschichten, die auf Böden verlegt sind, welche übereinander angeordnet und voneinander durch konvexe, konkave oder ebene Membranen getrennt sind.

Diese Konvertierungssysteme haben sich prinzipiell seit vielen Jahren bewährt. Probleme treten jedoch immer dann auf, wenn die $SO_2$-haltigen Gase Feststoffe oder Bestandteile enthalten, die mit der Katalysatormasse reagieren können. Dadurch wird ein Ansteigen des Druckverlustes in der Katalysatormasse und/oder eine Desaktivierung derselben bewirkt. Das betrifft normalerweise nur die erste Katalysatorschicht, führt aber zwangsläufig dazu, daß in mehr oder weniger langen Zeitabständen das gesamte Konvertierungssystem außer Betrieb genommen und abgekühlt werden muß. Nach Austausch der beeinträchtigten Katalysatormasse muß das System auf die erforderliche Reaktionstemperatur aufgeheizt werden, bevor die Schwefelsäureproduktion wieder aufgenommen werden kann. Diese mehrtägigen Stillstände bedeuten nicht nur eine starke Beeinträchtigung des Produktionsbetriebes, sondern auch eine Schwächung des Konstruktionsmaterials, das erfahrungsgemäß die längsten Standzeiten bei kontinuierlichem Betrieb ohne Temperaturwechsel erreicht.

Aus den Patentschriften US-A-1 995 292 und US-A-1 995 293 ist ein Konverter bekannt, bei dem die Kontaktmasse als vertikale ringförmige Schicht angeordnet ist. Dabei ist vorgesehen, im unteren Bereich Staub an der Kontaktmasse abzucheiden und diese schmutzige Kontaktmasse unten abzuziehen, während oben frische Kontaktmasse nachgefüllt wird. Die Probleme eines solchen Rutschbettes liegen darin, daß die relativ empfindliche Kontaktmasse durch Bildung von Abrieb zu ungleichmäßiger Gasverteilung Anlaß geben kann, und daß außerdem ein gleichmäßiger Austausch der Masse bei der vorgeschlagenen Konstruktion nicht gewährleistet werden kann.

In der DE-A-2 921 024 ist ferner vorgeschlagen worden, nicht in einem Konverter getrennte, übereinanderliegende Katalysatorschichten anzuordnen, sondern jede Katalysatorschicht einzeln als zylindrischen, senkrecht stehenden Ring um einen zentralen Röhrenwärmetauscher anzuordnen und vier von diesen Konvertereinheiten durch Rohrleitungen miteinander zu verbinden. Durch eine tangentiale Gaszuführung sollen die evtl. im Gas enthaltenen Feststoffe vor Eintritt des Gases in die Katalysatorschicht im Mantelraum des Konverters abgeschieden werden. Dieses Sytem kann Vorteile bieten, wenn das $SO_2$-haltige Gas relativ grobe Feststoffpartikel enthält. Enthält das Gas aber Verunreinigungen, die erst beim Kontakt mit der Katalysatormasse zur Bildung von Feststoffen führen, wie z.B. bestimmte Kohlenstoffverbindungen, oder die eine Desaktivierung des Katalysators bewirken, so ergibt sich trotzdem die Notwendigkeit, in Abständen das gesamte Konvertersystem außer Betrieb zu nehmen und zumindest den Katalysator des ersten Konverters zu erneuern. Vor der Wiederinbetriebnahme muß das System wieder auf Zündtemperatur aufgeheizt werden, so daß in jedem Fall ein mehrtägiger Stillstand erforderlich ist.

Das Ziel der vorliegenden Erfindung ist es, eine Vorrichtung zur Verfügung zu stellen, die es erlaubt, die Katalysatormasse des ersten Konverters eines Konvertersystems nach ihrer Verschmutzung oder Desaktivierung durch frische Masse zu ersetzen, ohne daß der Prozeß der $SO_2$-Konvertierung länger als einige Stunden unterbrochen werden muß.

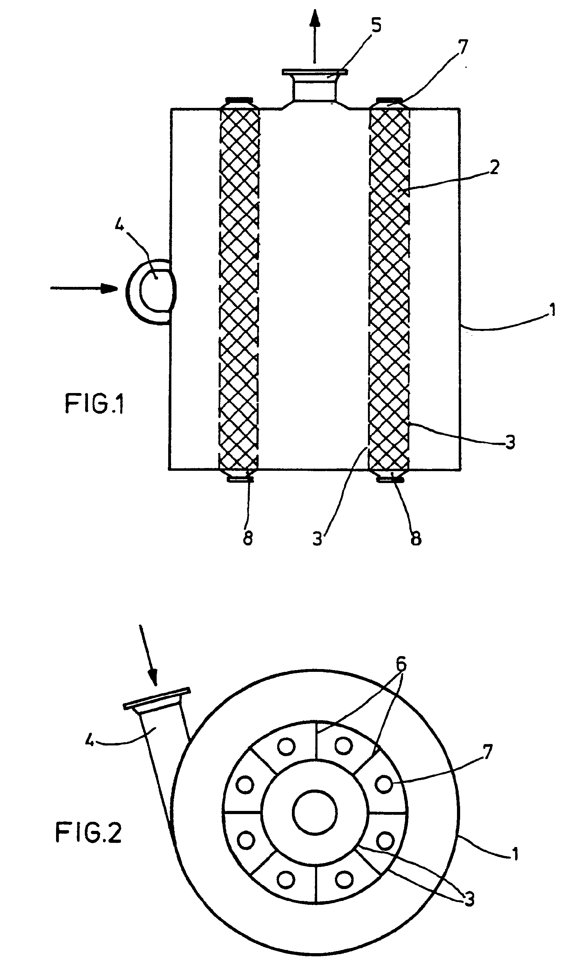

Es wurde nun ein Konverter gefunden, der die gestellten Anforderungen in hervorragender Weise erfüllt. Dieser Konverter ist Gegenstand der vorliegenden Erfindung. Die im folgenden benutzten Ziffern beziehen sich auf die Fig. 1 und 2, in denen eine einfachste Ausführungsform des erfindungsgemäßen Konverters dargestellt ist. Gegenstand der Erfindung ist ein Konverter für die katalytische Oxidation von Schwefeldioxid zu Schwefeltrioxid, bestehend aus einem stehenden zylindrischen Gehäuse (1), in dem in einem ringförmigen Raum die Katalysatormasse (2) zwischen gasdurchlässigen Wänden (3) angeordnet ist, welcher dadurch gekennzeichnet ist, daß der ringförmige Raum durch senkrechtstehende Trennwände (6) in Kammern unterteilt ist und jede Kamer oben eine Öffnung (7) zum Einfüllen von Katalysatormasse (2) und unten eine Öffnung (8) zum Austragen der Katalysatormasse (2) hat.

Der äußere Mantel des Konverters ist mit einer Gaseintrittsöffnung (4) versehen. Die Gaszuführung kann in beliebiger Form angeordnet sein. Vorteilhaft wird sie so ausgeführt, daß eine möglichst gleichmäßige Verteilung des Gases im äußeren Ringraum erreicht wird. Der zentrale Raum ist mit einer Öffnung (5) zur Ableitung des Gases nach dem Durchströmen der Katalysatormasse versehen. Die Zuleitung und Ableitung des Gases können auch vertauscht werden. Wesentlich ist die erfindungsgemäße Unterteilung des ringförmigen Raumes zwischen den gasdurchlässigen Wänden 3 in einzelne Kammern.

Dies geschieht durch die Trennwände 6.

Eine besonders bevorzugte Ausführungsform des erfindungsgemäßen Konverters besteht darin, daß der ringförmige Raum in mindestens drei Kammern unterteilt ist. Jede Kammer ist oben mit einer Öffnung (7) zum Einfüllen von Katalysatormasse und unten mit einer Öffnung (8) zum Entfernen der Katalysatormasse versehen.

Die Kammern zur Aufnahme der Katalysatormasse können auch mit ebenen gasdurchlässigen Wänden ausgebildet sein, so daß der Ringraum von oben als Vieleck erscheint. Diese Anordnung ist besonders günstig, wenn die gasdurchlässigen Wände jalousieartig ausgeführt werden sollen, um ein Herausfallen der Katalysatormasse durch die Gasdurchtrittstöffnungen oder ein Verstopfen derselben zu vermeiden.

Eine besonders bevorzugte Ausführungsform des erfindungsgemäßen Verfahrens besteht darin, daß im Zentrum des zylindrischen Konverters ein Gas-Gas-Wärmetauscher installiert ist.

Gegenstand der vorliegenden Erfindung ist auch ein Verfahren zu katalytischen Oxidation von Schwefeldioxid zu Schwefeltrioxid in einem aus mindestens vier Konvertern mit zugehörigen Wärmetauschern bestehenden Konvertierungsystem, wobei als erster Konverter der erfindungsgemäße oben beschriebene Konverter eingesetzt wird.

Erfindungsgemäß wird nach erfolgter Verschmutzung oder Desaktivierung der Katalysatormasse nur ein Teil der Kammern entleert und mit frischer Katalysatormasse gefüllt und zwar jede 2., 3. oder 4. Kammer der ringförmigen Folge. Dieser Wechsel kann in relativ kurzer Zeit erfolgen, ohne daß der Konverter abgekühlt werden muß.

Eine bevorzugte Ausführungsform des erfindungsgemäßen Verfahrens besteht darin, daß die verschmutzte oder desaktivierte Katalysatormasse des ersten Konverters dergestalt durch frische Katalysatormasse ersetzt wird, daß ohne vorherige Abkühlung des Konvertierungssystems die Katalysatormasse aus maximal 50% der Kammern entnommen und durch frische Katalysatormasse ersetzt wird und daß das Konvertierungssystem danach direkt wieder mit $SO_2$-haltigem Gas in Betrieb genommen wird und daß die nicht ersetzte, geschädigte Katalysatormasse der anderen Kammern analog zu späteren Zeitpunkten ersetzt wird.

Nach dem Einfüllen des frischen Katalysators kann das Konvertierungsystem direkt wieder in Betrieb genommen werden. Die Temperatur der Katalysatormasse, die nicht aus den Kammern entfernt wurde, liegt noch über der Zündtemperatur, so daß in diesen Kammern sofort die $SO_2$-Konvertierung erfolgt.

Wenn der Konverter jetzt mit $SO_2$-haltigem Gas beaufschlagt wird, heizt sich die neu eingefüllte Kontaktmasse durch die Strahlungswärme des Systems und durch das heiße $SO_2$-haltige Gas schnell auf Zündtemperatur auf, so daß die Produktionsverluste auf ein Minimum reduziert werden. Die alte Katalysatormasse aus den anderen Kammern wird analog in weiteren relativ kurzen Betriebsstillständen ausgetauscht.

Ein wesentlicher Vorteil des erfindungsgemäßen Verfahrens liegt darin, daß die Katalysatormasse in den Konvertern 2, 3 usw. auf einer so hohen Temperatur bleibt, daß eine ausreichende $SO_2$-Konvertierung ohne lange Wiederinbetriebnahmezeit gewährleistet wird.

Ein anderer Vorteil des erfindungsgemäßen Verfahrens liegt darin, daß der vollständige Austausch der Katalysatormasse einzelner Kammern erfolgen kann, ohne daß Personen in den Apparat einsteigen müssen. Dadurch ist der Austausch ohne vorheriges Abkühlen des Gesamtsystems in kürzester Zeit möglich.

Wegen der kompakten Bauweise des vorgeschlagenen Konverters kann dieser auch vor bestehende Konvertierungsysteme vorgeschaltet werden. Dabei wird die Ausführung des erfindungsgemäßen Konverters mit gekammerter Katalysatorschicht bevorzugt, bei der im Zentrum des zylindrischen Konverters einen Gas-Gas-Wärmetauscher installiert ist.

**Ansprüche**

1. Konverter für die katalytische Oxidation von Schwefeldioxid zu Schwefeltrioxid, bestehend aus einem stehenden zylindrischen Gehäuse (1), in dem in einem ringförmigen Raum die Katalysatormasse (2) zwischen gasdurchlässigen Wänden (3) angeordnet ist, dadurch gekennzeichnet, daß der ringförmige Raum durch senkrechtstehende Trennwände (6) in Kammern unterteilt ist und jede Kammer oben eine Öffnung (7) zum Einfüllen von Katalysatormasse (2) und unten eine Öffnung (8) zum Austragen der Katalysatormasse (2) hat.

2. Konverter gemäß Anspruch 1, dadurch gekennzeichnet, daß der ringförmige Raum in mindestens drei Kammern unterteilt ist.

3. Konverter gemäß einem der Ansprüche 1 oder 2, dadurch gekennzeichnet, daß im Zentrum des zylindrischen Konverters ein Gas-Gas-Wärmetauscher installiert ist.

4. Verfahren zur katalytischen Oxidation von Schwefeldioxid zu Schwefeltrioxid in einem aus mindestens vier Konvertern mit zugehörigen Wärmetauschern bestehenden Konvertierungssystem, dadurch gekennzeichnet, daß der erste Konverter des Systems ein Konverter gemäß einem oder mehrerer der Ansprüche 1 bis 3 ist.

5. Verfahren gemäß Anspruch 4, dadurch gekennzeichnet, daß die verschmutzte oder desaktivierte Katalysatormasse des ersten Konverters dergestalt durch frische Katalysatormasse ersetzt wird, daß ohne vorherige Abkühlung des Konvertierungssystems die Katalysatormasse aus maximal 50% der Kammern entnommen und durch frische Katalysatormasse ersetzt wird und daß das Konvertierungssystem danach direkt wieder mit SO$_2$-haltigem Gas in Betrieb genommen wird und daß die nicht ersetzte, geschädigte Katalysatormasse der anderen Kammern analog zu späteren Zeitpunkten ersetzt wird.

## Claims

1. Converter for the catalytic oxidation of sulphur dioxide to sulphur trioxide, consisting of a vertical cylindrical casing (1) in which in an annular space the catalyst material (2) is arranged between walls (3) permeable to gas, characterized in that the annular space is subdivided by vertical partitions (6) into chambers and each chamber has at the top an opening (7) for the charging of catalyst material (2) and at the bottom an opening (8) for the discharging of the catalyst material (2).

2. Converter according to Claim 1, characterized in that the annular space is subdivided into at least three chambers.

3. Converter according to one of Claims 1 or 2, characterized in that in the centre of the cylindrical converter a gas-gas heat exchanger is installed.

4. Process for the catalytic oxidation of sulphur dioxide to sulphur trioxide in a conversion system consisting of at least four converters with accompanying heat exchangers, characterized in that the first converter of the system is a converter according to one or more of Claims 1 to 3.

5. Process according to Claim 4, characterized in that the fouled or deactivated catalyst material of the first converter is replaced by fresh catalyst material in such a way that without prior cooling of the conversion system the catalyst material is removed from a maximum of 50% of the chambers and replaced by fresh catalyst material and that after that the conversion system is immediately brought into operation again with SO$_2$-containing gas and that the damaged catalyst material of the other chambers which has not been replaced is replaced analogously at later times.

## Revendications

1. Convertisseur destiné à l'oxydation catalytique du dioxyde de soufre en trioxyde de soufre, ce convertisseur étant constitué d'un logement cylindrique vertical (1), dans lequel la matière de catalyseur (2) est disposée au sein d'un espace annulaire, entre des parois (3) perméables au gaz, ce convertisseur étant **caractérisé en ce que** l'espace annulaire est subdivisé en chambres par l'intermédiaire de parois verticales (6) de séparation et en ce que chaque chambre est munie en son sommet d'une ouverture (7) destinée au remplissage de la masse de catalyseur (2) et d'une ouverture (8) à sa base destinée à l'évacuation de la matière de catalyseur (2).

2. Convertisseur selon la revendication 1, **caractérisé en ce que** l'espace annulaire est subdivisé en au moins trois chambres.

3. Convertisseur selon l'une quelconque des revendications 1 ou 2, **caractérisé en ce qu'**on installe un échangeur de chaleur gaz-gaz au centre du convertisseur cylindrique.

4. Procédé destiné à l'oxydation catalytique du dioxyde de soufre en trioxyde de soufre dans un système de conversion constitué par au moins quatre convertisseurs équipés d'échangeurs de chaleur correspondants, **caractérisé en ce que** le premier convertisseur du système est un convertisseur selon une ou plusieurs des revendications 1 à 3.

5. Procédé selon la revendication 4, **caractérisé en ce qu'**on remplace la matière de catalyseur encrassée ou désactivée du premier convertisseur par une matière de catalyseur fraîche, de telle sorte que, sans refroidissement préalable du système de conversion, on retire la matière de catalyseur hors d'un maximum de 50% des chambres, que l'on remplace par de la matière de catalyseur fraîche et de telle sorte que l'on remette directement en service le système de conversion avec du gaz à teneur en SO$_2$, et **en ce qu'**on remplace la matière de catalyseur des autres chambres, qui a été endommagée et qui n'a pas été remplacée, de manière analogue, à des moments ultérieurs.

FIG.1

FIG.2